# EUROPÄISCHE PATENTSCHRIFT

(11) **EP 3 669 444 B1**
(45) Veröffentlichungstag und Bekanntmachung des Hinweises auf die Patenterteilung: **30.11.2022**
(21) Anmeldenummer: 18743682.9
(22) Anmeldetag: 16.07.2018
(51) Int. Cl.: H02K 7/00, H02K 7/08, H02K 1/28, H02K 5/173

(54) **ELEKTROMOTOR, UMFASSEND EINEN ROTOR**
ELECTRIC MOTOR, COMPRISING A ROTOR
MOTEUR ÉLECTRIQUE COMPRENANT UN ROTOR

(30) Priorität: 16.08.2017 DE 102017007694
(43) Veröffentlichungstag der Anmeldung: 24.06.2020
(73) Patentinhaber: SEW-EURODRIVE GmbH & Co. KG, 76646 Bruchsal (DE)
(72) Erfinder: STARK, Michael, D-76669 Bad Langenbrücken (DE); MÜLLER, Klaus, D-76229 Karlsruhe (DE); WINTER, Bernhard, D-64342 Seeheim-Jugenheim (DE)
(86) Internationale Anmeldenummer: PCT/EP2018/025196
(87) Internationale Veröffentlichungsnummer: WO 2019/034285

(56) Entgegenhaltungen:
- DE-A1- 4 205 322
- DE-U1- 20 307 198
- JP-A- 2013 074 736
- JP-A- 2014 093 866
- US-A- 3 391 291

## Beschreibung

Die Erfindung betrifft einen Elektromotor, umfassend einen Rotor.

Es ist allgemein bekannt, dass ein Elektromotor einen drehbar gelagerten Rotor aufweist.

Aus der US 3 391 291 A ist als nächstliegender Stand der Technik ein Elektromotor bekannt.

Aus der DE 203 07 198 U1 ist ein Rotor für einen Elektromotor bekannt.

Aus der DE 42 05 322 A1 ist eine Wellenkupplung für Unterzylinder von Streckwerken an Spinnmaschinen bekannt.

Aus der JP 2013 074736 A ist ein Elektromotor bekannt.

Aus der JP 2014 093866 A ist ein Elektromotor mit einem Rotor bekannt.

Der Erfindung liegt daher die Aufgabe zugrunde, einen Elektromotor in vielen Varianten kostengünstig herstellbar zu machen.

Erfindungsgemäß wird die Aufgabe bei dem Elektromotor nach den in Anspruch 1 angegebenen Merkmalen gelöst.

Von Vorteil ist dabei, dass der Rotor mehrteilig ausgeführt ist. Somit ist mit einer geringen Anzahl von Teilen eine hohe Varianz an Rotoren herstellbar. Daher ist der Rotor bei diesen Varianten am axial vorderen Endbereich mit verschiedenen Optionen anbietbar. Beispielsweise ist das erste Wellenteil größer oder kleiner ausführbar und somit ein verschieden großes Ritzel aufsteckbar. Ebenso ist das zweite Wellenteil mit einem Verbindungsabschnitt für einen Lüfter und/oder eine Bremse ausführbar oder mit oder ohne Verlängerungsabschnitt.

Bei einer vorteilhaften Ausgestaltung ist der Rotor über ein erstes Lager in einem ersten Lagerschild gelagert und über ein zweites Lager in einem zweiten Lagerschild, wobei das erste und das zweite Lagerschild mit einem Statorgehäuse verbunden sind, welches zwischen dem ersten und dem zweiten Lagerschild angeordnet ist. Von Vorteil ist dabei, dass die Lagerung des Rotors an den beiden Wellenteilen ausführbar ist und somit ein hohes Quermoment ableitbar ist. Außerdem ist das Rotorwellenteil selbst möglichst wenig mit Verspannungen beaufschlagt. Außerdem sind verschieden große Lager vorsehbar.

Bei einer vorteilhaften Ausgestaltung ist am ersten Lagersitz ein erstes Lager des Rotors angeordnet und am zweiten Lagersitz ein zweites Lager des Rotors,
wobei das erste Lager im ersten Lagerschild aufgenommen ist und das zweite Lager im zweiten Lagerschild. Von Vorteil ist dabei, dass eine einfache Herstellung ermöglicht ist und durch die Dreiteilung des Gehäuses in Statorgehäuseteil und zwei Lagerschilde verschiedene axial vorderen oder hinteren mechanische Schnittstellen in einfacher Weise und unter Verwendung einer geringen Anzahl von Teilen eine hohe Varianz an Motoren bereit stellbar ist.

Bei einer vorteilhaften Ausgestaltung ist im Statorgehäuse ein Statorblechpaket mit darin eingelegter Statorwicklung aufgenommen. Von Vorteil ist dabei, dass die Statorwicklung als Drehstromwicklung ausführbar ist und somit dann ein Drehfeld erzeugbar ist. Der Rotor weist einen Kurzschlusskäfig auf, so dass der Elektromotor ein Asynchronmotor ist.

**Erfindungsgemäß** weist das erste Wellenteil einen ersten Zapfenbereich auf, welcher in eine erste Ausnehmung des Rotorwellenteils eingepresst ist,
wobei das zweite Wellenteil einen zweiten Zapfenbereich aufweist, welcher in eine zweite Ausnehmung des Rotorwellenteils eingepresst ist. Von Vorteil ist dabei, dass eine zentrische drehfeste Verbindung der Wellenteile mit dem Rotorwellenteil herstellbar ist.
Bei einer vorteilhaften Ausgestaltung weist der erste Zapfenbereich einen Verzahnungsbereich, also verzahnten Bereich, und einen zylindrischen Bereich auf, wobei der Verzahnungsbereich in einen innenverzahnten Bereich der ersten Ausnehmung eingepresst ist, insbesondere unter elastischer Verformung,
und/oder
der zweite Zapfenbereich weist ebenfalls einen Verzahnungsbereich, also verzahnten Bereich, und einen zylindrischen Bereich auf, wobei der Verzahnungsbereich in einen innenverzahnten Bereich der zweiten Ausnehmung eingepresst ist, insbesondere unter elastischer Verformung. Von Vorteil ist dabei, dass eine besonders hoch belastbare drehfeste Verbindung erreicht ist.

**Erfindungsgemäß** ist ein Rotorblechpaket auf dem Rotorwellenteil angeordnet, wobei der Berührbereich zwischen Rotorblechpaket und Rotorwellenteil axial geringer ausgedehnt ist als das Rotorblechpaket. Dabei sind axial beidseitig Spalte vorgesehen,
welche das Rotorblechpaket von axial eingeleiteten Verspannungen, insbesondere aus dem Bereich der Verbindung der Zapfenbereiche mit dem Rotorwellenteil schützen.

**Erfindungsgemäß** ist zwischen dem Rotorblechpaket und dem Rotorwellenteil ein erster Spalt angeordnet, welcher axial an den Berührbereich angrenzt,
und zwischen dem Rotorblechpaket und dem Rotorwellenteil ist ein zweiter Spalt angeordnet, welcher axial an den Berührbereich angrenzt. Von Vorteil ist dabei, dass der Berührbereich, also Tragbereich, geschützt ist vor durch Verbindungsschnittstellen eingeleitete Verspannungen und somit seine zylindrische Außenkontur unverändert behält.

**Erfindungsgemäß** überlappt der vom Zapfenbereich des ersten Wellenteils überdeckte axiale Bereich mit dem vom ersten Spalt überdeckten axialen Bereich und/oder ist beabstandet von dem vom Berührbereich überdeckten axialen Bereich,
und/oder
der vom Zapfenbereich des zweiten Wellenteils überdeckte axiale Bereich überlappt mit dem vom zweiten Spalt überdeckten axialen Bereich und/oder ist beabstandet von dem vom Berührbereich überdeckten axialen Bereich. Von Vorteil ist dabei, dass keine schädlichen Verspannungen, welche eine Verformung des Berührbereichs bewirken, zum Berührbereich gelangen. Von Vorteil ist ferner, dass keine wesentlichen Verspannungen vom Zapfenbereich zum Berührbereich durchgeleitet werden, obwohl der Zapfenbereich eingepresst wird in die am Rotorwellenteil ausgebildete Innenverzahnung und bei diesem Einpressen hohe Kräfte eingeleitet werden.

Bei einer vorteilhaften Ausgestaltung ist ein Kurzschlusskäfig im Rotorblechpaket aufgenommen. Von Vorteil ist dabei, dass der Motor als Asynchronmotor ausführbar ist.

Bei einer vorteilhaften Ausgestaltung weist das erste Wellenteil einen Verbindungsbereich auf, insbesondere welcher eine Passfedernut zur Verbindung mit einem Verzahnungsteil, insbesondere Ritzel, aufweist. Von Vorteil ist dabei, dass der Motor zum Antreiben eines Getriebes verwendbar ist.

Bei einer vorteilhaften Ausgestaltung weist das zweite Wellenteil einen Verbindungsbereich auf, insbesondere welcher eine Passfedernut zur Verbindung mit einem Lüfterrad und/oder mit einem Mitnehmer aufweist. Von Vorteil ist dabei, dass der Motor als Bremsmotor oder Lüftermotor ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Längsschnitt durch einen erfindungsgemäßen Elektromotor gezeigt, welcher einen Rotor aufweist, der aus einem Rotorwellenteil 9, einem ersten Wellenteil 8 und einem zweiten Wellenteil 12 zusammengesetzt ist.

In der Figur 2 ist der Rotor in einer Seitenansicht gezeigt, wobei ein Rotorblechpaket 4 zusammen mit einem Kurzschlusskäfig 3, welche auf dem Rotorwellenteil 9 sitzen, angeschnitten dargestellt sind.

In der Figur 3 ist das zweite Wellenteil 12 in Schrägansicht dargestellt.

In der Figur 4 ist das erste Wellenteil 8 in Schrägansicht dargestellt.

In der Figur 5 ist der Rotor eines zu dem Ausführungsbeispiel nach Figur 1 bis 4 ähnlichen Ausführungsbeispiels dargestellt, wobei das Rotorwellenteil 9 angeschnitten dargestellt ist.

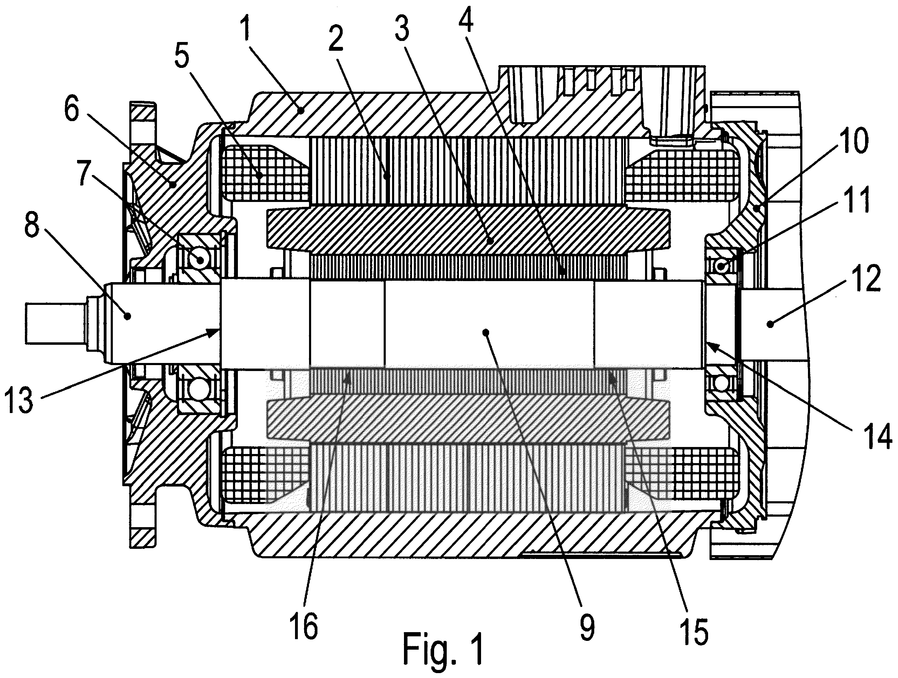

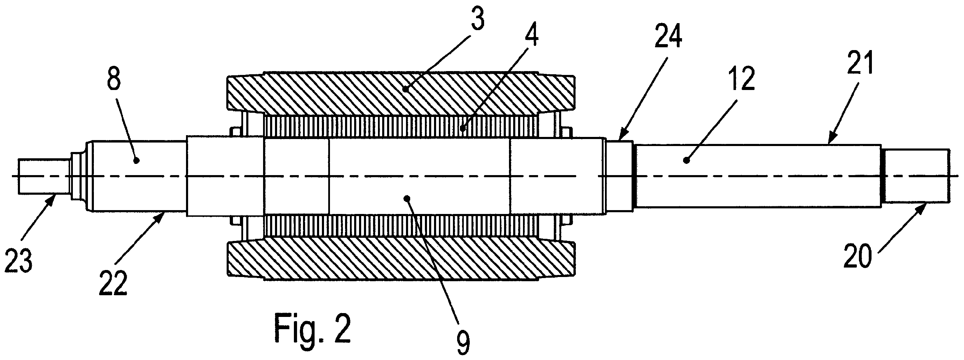

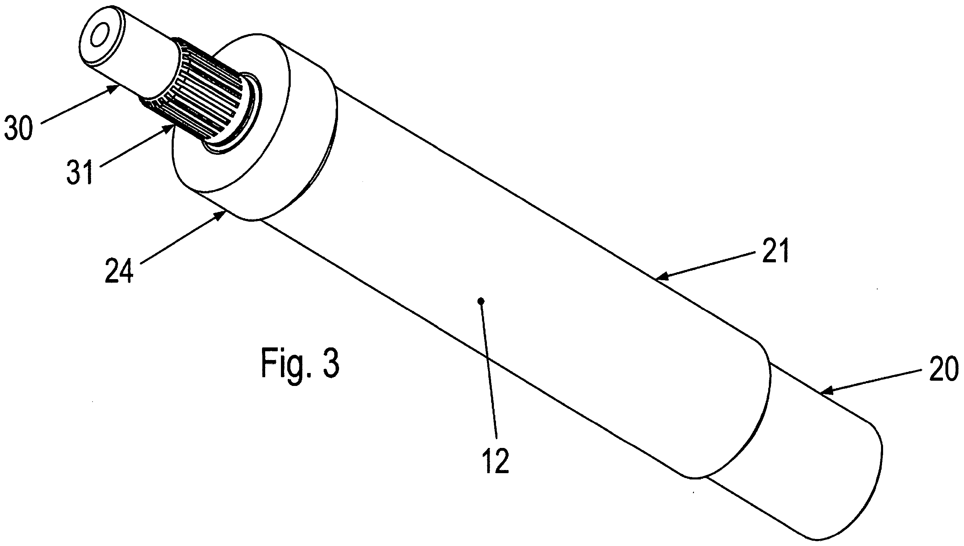

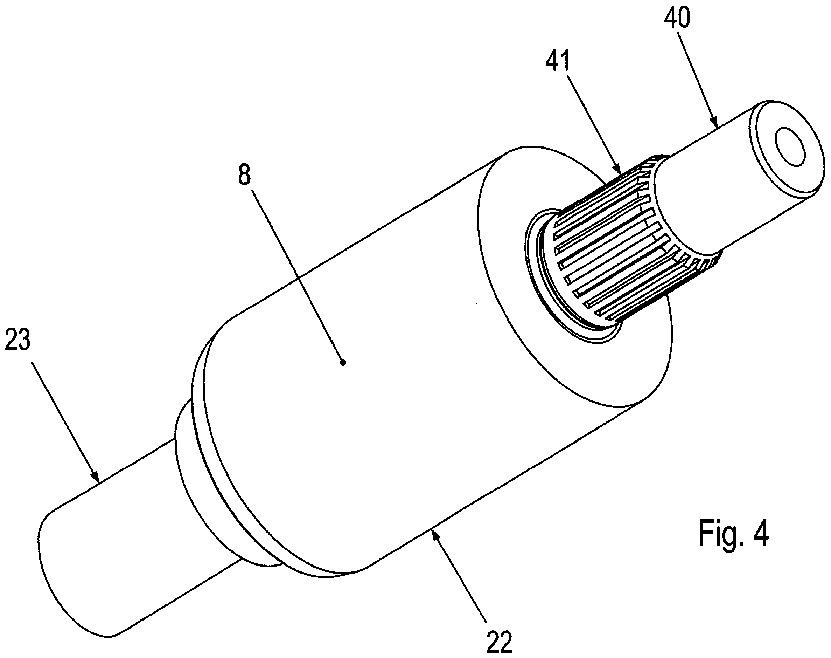

Wie in den Figuren 1 bis 4 gezeigt weist der Motor ein Statorgehäuse 1 auf, in welchem ein die Statorwicklung aufnehmendes Statorblechpaket 2 aufgenommen ist. Der Wickelkopf 5 ragt axial beidseitig über den vom Statorblechpaket 2 überdeckten axialen Bereich hervor.

Das Statorgehäuse 1 ist an seinem ersten axialen Endbereich mit einem Lagerschild 6 verbunden, welches ein erstes Lager 7 zur Lagerung des Rotors aufnimmt.

Das Statorgehäuse 1 ist an seinem anderen axialen Endbereich mit einem Lagerschild 10 verbunden, welches ein zweites Lager 11 zur Lagerung des Rotors aufnimmt.

Der Rotor ist aus einem Rotorwellenteil 9 gebildet, welches an seinen beiden axialen Endbereichen jeweils eine axial gerichtete Stufenbohrung aufweist, in welche jeweils ein am ersten Wellenteil 8 beziehungsweise am zweiten Wellenteil 12 ausgeformter Zapfenbereich eingesteckt ist.

Das erste Wellenteil 8 weist einen Lagersitz 22 auf, auf dem das erste Lager 7 angeordnet ist. Außerdem ist der Zapfenbereich des ersten Wellenteils 8 an der dem Rotorwellenteil 9 zugewandten axialen Endbereich des ersten Wellenteils 8 angeordnet. Dabei weist der Zapfenbereich einen Verzahnungsbereich 41 und einen zwischen dem Verzahnungsbereich 41 und Lagersitz 22 angeordneten zylindrischen Bereich 40 auf.

Am anderen axialen Endbereich des ersten Wellenteils 8 ist ein Verbindungsbereich 23 ausgebildet, der eine Passfedernut aufweist, so dass ein Verzahnungsteil, insbesondere Ritzel, mittels Passfederverbindung drehfest mit dem Verbindungsbereich 23 verbindbar ist.

Das zweite Wellenteil 12 weist einen Lagersitz 24 auf, auf dem das zweite Lager 11 angeordnet ist. Außerdem ist der Zapfenbereich des zweiten Wellenteils 12 an der dem Rotorwellenteil 9 zugewandten axialen Endbereich des ersten Wellenteils 8 angeordnet. Dabei weist der Zapfenbereich einen Verzahnungsbereich 31 und einen zwischen dem Verzahnungsbereich 31 und Lagersitz 24 angeordneten zylindrischen Bereich 30 auf.

Am anderen axialen Endbereich des zweiten Wellenteils 12 ist ein Verbindungsbereich 20 ausgebildet, der eine Passfedernut aufweist, so dass ein Lüfter mittels Passfederverbindung drehfest mit dem Verbindungsbereich 20 verbindbar ist. Alternativ oder zusätzlich ist hier auch ein Winkelsensor verbindbar zur Detektion der Winkelstellung des Rotors.

Zwischen dem Lagersitz 24 und dem Verbindungsbereich 20 ist ein Beabstandungsbereich 21 angeordnet. Dieser ist optional auch mit einer Passfedernut ausstattbar, so dass ein Verzahnungsteil, insbesondere Mitnehmer, formschlüssig mit dem Wellenteil 12 verbindbar ist. Auf dem Verzahnungsteil ist ein Bremsbelagträger einer elektromagnetisch betätigbaren Bremse anordenbar, welcher drehfest mit dem Rotor aber axial verschiebbar anordenbar ist.

Die Verzahnungsbereiche 31 und 41 sind als axial geformte Verzahnung ausführbar und/oder jeweils als gerändelte Bereiche ausführbar, insbesondere also so, dass die Verzahnung als Rändelung ausgeführt ist.

Die jeweilige Stufenbohrung weist einen zylindrischen Bereich auf, in welchem der jeweilige zylindrische Bereich (30, 40) aufgenommen wird, und jeweils einen innenverzahnten Bereich, in welchen der jeweilige Verzahnungsbereich (31, 41) eingepresst wird. Bei diesem Einpressen erfolgt aber nur elastische Verformung, also keine Spanbildung.

Vorzugswiese weist der zylindrische Bereich (30, 40) eine größere axiale Länge auf als die Verzahnungsbereiche (31, 41). Somit führt und zentriert der jeweilige zylindrische Bereich (30, 40) das jeweilige Wellenteil (8, 12) beim Einpressen der Verzahnungsbereiche (31, 41) in den jeweiligen außenverzahnten Bereich.

Der Lagersitz 24 des zweiten Wellenteils 12 weist einen größeren Durchmesser auf als der zu ihm axial benachbarte Verzahnungsbereich 31. Der Lagersitz 24 des zweiten Wellenteils weist einen größeren Durchmesser auf als der auf der vom Verzahnungsbereich 31 axial abgewandten Seite des Lagersitzes 24 angeordnete Beabstandungsbereich 21.

Der Beabstandungsbereich 21 wiest einen größeren Durchmesser auf als der Verbindungsbereich 20.

Der Lagersitz 22 des ersten Wellenteils 8 weist einen größeren Durchmesser auf als der zu ihm axial benachbarte Verzahnungsbereich 41. Der Lagersitz 22 des ersten Wellenteils 8 weist einen größeren Durchmesser auf als der Verbindungsbereich 23, der auf der vom Verzahnungsbereich 41 axial abgewandten Seite des Lagersitzes 22.

Das Rotorblechpaket 4 ist auf das Rotorwellenteil 9 aufgesteckt. Der Bereich der Berührung, also Berührbereich, zwischen Rotorblechpaket 4 und Rotorwellenteil 9 ist jedoch axial weniger ausgedehnt als das Rotorblechpaket 4.

Denn das Rotorwellenteil 9 weist im Berührbereich einen größeren Durchmesser auf als in den axial beidseitig, angrenzenden Bereichen des Rotorwellenteils 9. Somit ist in diesen angrenzenden Bereichen jeweils ein Spalt (15, 16) zwischen Rotorblechpaket 4 und Rotorwellenteil 9 ausgebildet.

Der Kurzschlusskäfig 3 ist vorzugsweise aus Aluminium und/oder Kupfer ausgeführt. Das Rotorblechpaket 4 ist vorzugsweise aus einem in axialer Richtung gebildeten Stapel von Einzelblechteilen gefertigt, welche vorzugsweise aus Stahlblech hergestellt sind.

Der von der jeweiligen Stufenbohrung axial überdeckte Bereich ist beabstandet von dem vom Berührbereich axial überdeckten Bereich. Somit ist also ein axialer Abstand zwischen Stufenbohrung und Berührbereich vorhanden.

Der von der jeweiligen Stufenbohrung axial überdeckte Bereich darf jedoch mit dem von dem jeweiligen benachbarten Spalt (15, 16) überdeckten axialen Bereich überlappen. In jedem Fall ist aber auch dann ein axialer Abstand zwischen Stufenbohrung und Berührbereich des Rotorblechpakets 4 mit dem Rotorwellenteil 9 vorhanden.

Auf diese Weise werden Spannungen, die gegebenenfalls beim Verbinden der Wellenteile 8 und 12 mit dem Rotorwellenteil 9 entstehen, möglichst ferngehalten von dem Berührbereich, in welchem es wichtig ist, dass das Rotorwellenteil 9 eine möglichst präzise zylindrische Außenkontur aufweist.

Außerdem ist für den Fall, dass die Wellenteile 8 und 12 nicht genau genug fluchten mit dem Rotorwellenteil 9 ein nachträgliches Verformen und somit Ausrichten der Wellenteile 8 und 12 zum Rotorwellenteil 9 hin ermöglicht, ohne dass die dabei entstehenden Spannungen einen störenden Einfluss auf das auf dem Berührbereich aufgenommene Rotorblechpaket 4 ausüben.

Das Rotorblechpaket 4 ist auf den Berührbereich vorzugsweise thermisch aufgeschrumpft, also kraftschlüssig verbunden.

Das erste Wellenteil 8 liegt an der Schnittkante 13 des Rotorwellenteils 9 an mit der am Ansatz des Zapfenbereichs angeordneten Stufe.

Das zweite Wellenteil 12 liegt an der Schnittkante 14 des Rotorwellenteils 9 an mit der am Ansatz des Zapfenbereichs angeordneten Stufe.

Durch die mehrteilige Ausführung des Rotors ist mit einer geringen Anzahl von Bauteilen eine hohe Varianz von Rotoren bereit stellbar.

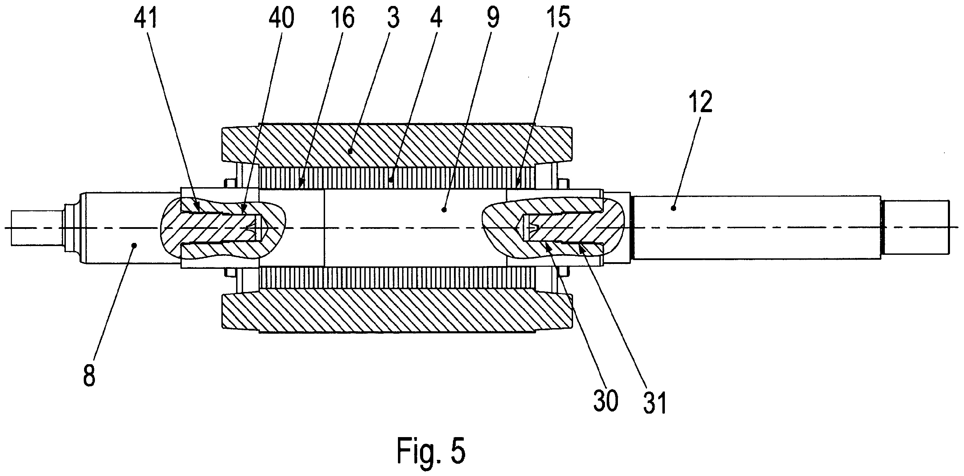

Wie in dem ähnlichen Rotor gemäß Figur 5 gezeigt, ist der zylindrischer Bereich 40 des Zapfenbereichs des ersten Wellenteils 8 und der Verzahnungsbereich 41 des Zapfenbereichs des ersten Wellenteils 8 jeweils beabstandet vom Spalt 16, welcher axial zwischengeordnet ist zwischen dem zylindrischen Bereich 40 und dem Berührbereich des Statorblechpakets 4 mit dem Rotorwellenteil 9.

Ebenso der zylindrischer Bereich 30 des Zapfenbereichs des zweiten Wellenteils 12 und der Verzahnungsbereich 31 des Zapfenbereichs des zweiten Wellenteils 12 jeweils beabstandet vom Spalt 15, welcher axial zwischengeordnet ist zwischen dem zylindrischen Bereich 30 und dem Berührbereich des Statorblechpakets 4 mit dem Rotorwellenteil 9.

Der Berührbereich fungiert also als Tragbereich für das Rotorblechpaket 4.

Das erste Wellenteil 8 ist aus Stahl gefertigt. Das zweite Wellenteil 12 ist aus Stahl gefertigt. Das erste Rotorwellenteil 9 ist aus Stahl gefertigt.

Bei weiteren erfindungsgemäßen Ausführungsbeispielen werden die zylindrischen Bereiche (30, 40) der Zapfenbereiche und/oder die Verzahnungsbereiche (31, 41) zusätzlich mit einer Spiralnut versehen. Auf diese Weise kann die beim Einpressen der Zapfenbereiche in die Stufenbohrung zusammengedrückte Luft entweichen und die Zentrierung beim Einpressen ist somit einfacher gewährleistbar.

### Bezugszeichenliste

1 Statorgehäuse
2 Statorblechpaket
3 Kurzschlusskäfig
4 Rotorblechpaket
5 Wickelkopf
6 Lagerschild
7 Lager
8 erstes Wellenteil
9 Rotorwellenteil
10 Lagerschild
11 Lager
12 zweites Wellenteil
13 Schnittkante
14 Schnittkante
15 Spalt
16 Spalt
20 Verbindungsbereich
21 Beabstandungsbereich
22 Lagersitz
23 Verbindungsbereich
24 Lagersitz
30 zylindrischer Bereich des Zapfenbereichs
31 Verzahnungsbereich des Zapfenbereichs
40 zylindrischer Bereich des Zapfenbereichs
41 Verzahnungsbereich des Zapfenbereichs

## Patentansprüche

1. Elektromotor, umfassend einen Rotor,
**wobei** der Rotor ein Rotorwellenteil (9) und ein erstes Wellenteil (8) und ein zweites Wellenteil (12) aufweist,
wobei das Rotorwellenteil (9) axial zwischen dem ersten und dem zweiten Wellenteil (8, 12) angeordnet ist,
wobei das erste Wellenteil (8) einen ersten Lagersitz (22) aufweist und mit dem Rotorwellenteil (9) drehfest verbunden ist,
wobei das zweite Wellenteil (12) einen zweiten Lagersitz (24) aufweist und mit dem Rotorwellenteil (9) drehfest verbunden ist,
wobei **ein Rotorblechpaket (4) auf dem** Rotorwellenteil (9) **angeordnet ist, wobei der Berührbereich zwischen Rotorblechpaket (4) und Rotorwellenteil axial geringer ausgedehnt ist als das Rotorblechpaket (4),**
**wobei zwischen dem Rotorblechpaket (4) und dem Rotorwellenteil** (9) **ein erster Spalt** (15) **angeordnet ist, welcher axial an den Berührbereich angrenzt,**
**und wobei zwischen dem Rotorblechpaket (4) und dem Rotorwellenteil** (9) **ein zweiter Spalt** (16) **angeordnet ist, welcher axial an den Berührbereich angrenzt,**
**wobei der erste Spalt** (15) **und der zweite Spalt** (16) **axial beidseitig des Berührungsbereichs angeordnet sind,**
**wobei das erste Wellenteil (8) einen ersten Zapfenbereich aufweist, welcher in eine erste Ausnehmung des Rotorwellenteils** (9) **eingepresst ist,**
**wobei das zweite Wellenteil (12) einen zweiten Zapfenbereich aufweist, welcher in eine zweite Ausnehmung des Rotorwellenteils** (9) **eingepresst ist,**
wobei der erste Zapfenbereich und der zweite Zapfenbereich jeweils axial zwischen dem Berührbereich und einem der Lagersitze (22, 24) angeordnet sind,
**wobei der vom Zapfenbereich des ersten Wellenteils (8) überdeckte axiale Bereich überlappt mit dem vom ersten Spalt überdeckten axialen Bereich und/oder**
axial **beabstandet ist von dem vom Berührbereich überdeckten axialen Bereich,**
**wobei der vom Zapfenbereich des zweiten Wellenteils (12) überdeckte axiale Bereich überlappt mit dem vom zweiten Spalt überdeckten axialen Bereich und/oder**
axial **beabstandet ist von dem vom Berührbereich überdeckten axialen Bereich.**

2. Elektromotor nach Anspruch 1,
**dadurch gekennzeichnet, dass**
der Rotor über ein erstes Lager (7) in einem ersten Lagerschild (6) gelagert ist und über ein zweites Lager (11) in einem zweiten Lagerschild (10), wobei das erste und das zweite Lagerschild (6, 10) mit einem Statorgehäuse (1) verbunden sind, welches zwischen dem ersten und dem zweiten Lagerschild (6, 10) angeordnet ist.

3. Elektromotor nach mindestens einem der vorangegangenen Ansprüche,
**dadurch gekennzeichnet, dass**
am ersten Lagersitz (22) ein erstes Lager (7) des Rotors angeordnet ist und am zweiten Lagersitz (24) ein zweites Lager (11) des Rotors,
wobei das erste Lager (7) im ersten Lagerschild (6) aufgenommen ist und das zweite Lager (11) im zweiten Lagerschild (10).

4. Elektromotor nach mindestens einem der vorangegangenen Ansprüche,
**dadurch gekennzeichnet, dass**
im Statorgehäuse (1) ein Statorblechpaket (2) mit darin eingelegter Statorwicklung aufgenommen ist.

5. Elektromotor nach mindestens einem der vorangegangenen Ansprüche, **dadurch gekennzeichnet, dass**
der erste Zapfenbereich einen Verzahnungsbereich (31), also verzahnten Bereich, und einen zylindrischen Bereich (30) aufweist, wobei der Verzahnungsbereich (31) in einen innenverzahnten Bereich der ersten Ausnehmung eingepresst ist, insbesondere unter elastischer Verformung,
und/oder
der zweite Zapfenbereich ebenfalls einen Verzahnungsbereich (41), also verzahnten Bereich, und einen zylindrischen Bereich (40) aufweist, wobei der Verzahnungsbereich (41) in einen innenverzahnten Bereich der zweiten Ausnehmung eingepresst ist, insbesondere unter elastischer Verformung.

6. Elektromotor nach mindestens einem der vorangegangenen Ansprüche, **dadurch gekennzeichnet, dass**
ein Kurzschlusskäfig (3) im Rotorblechpaket (4) aufgenommen ist.

7. Elektromotor nach mindestens einem der vorangegangenen Ansprüche, **dadurch gekennzeichnet, dass**
das erste Wellenteil (8) einen Verbindungsbereich (20) aufweist, insbesondere welcher eine Passfedernut zur Verbindung mit einem Verzahnungsteil, insbesondere Ritzel, aufweist.

8. Elektromotor nach mindestens einem der vorangegangenen Ansprüche, **dadurch gekennzeichnet, dass**
das zweite Wellenteil (12) einen Verbindungsbereich (23) aufweist, insbesondere welcher eine Passfedernut zur Verbindung mit einem Lüfterrad und/oder mit einem Mitnehmer aufweist.

## Claims

1. Electric motor comprising a rotor,
wherein the rotor has a rotor shaft part (9), a first shaft part (8) and a second shaft part (12),
wherein the rotor shaft part (9) is arranged axially between the first and the second shaft part (8, 12),
wherein the first shaft part (8) has a first bearing seat (22) and is connected to the rotor shaft part (9) for conjoint rotation,
wherein the second shaft part (12) has a second bearing seat (24) and is connected to the rotor shaft part (9) for conjoint rotation,
wherein a rotor laminated core (4) is arranged on the rotor shaft part (9), wherein the region of contact between the rotor laminated core (4) and the rotor shaft part has less of an axial extent than the rotor laminated core (4),
wherein a first gap (15) is arranged between the rotor laminated core (4) and the rotor shaft part (9) and axially adjoins the region of contact,
and wherein a second gap (16) is arranged between the rotor laminated core (4) and the rotor shaft part (9) and axially adjoins the region of contact,
wherein the first gap (15) and the second gap (16) are arranged axially on both sides of the region of contact,
wherein the first shaft part (8) has a first pin region, which is pressed into a first recess in the rotor shaft part (9),
wherein the second shaft part (12) has a second pin region, which is pressed into a second recess in the rotor shaft part (9),
wherein the first pin region and the second pin region are each arranged axially between the region of contact and one of the bearing seats (22, 24),
wherein the axial region covered by the pin region of the first shaft part (8) overlaps with the axial region covered by the first gap and/or is axially spaced apart from the axial region covered by the region of contact,
wherein the axial region covered by the pin region of the second shaft part (12) overlaps with the axial region covered by the second gap and/or is axially spaced apart from the axial region covered by the region of contact.

2. Electric motor according to claim 1,
**characterised in that**
the rotor is borne in a first end shield (6) by means of a first bearing (7) and is borne in a second end shield (10) by means of a second bearing (11), the first and the second end shield (6, 10) being connected to a stator casing (1) arranged between the first and the second end shield (6, 10).

3. Electric motor according to at least one of the preceding claims,
**characterised in that**
a first bearing (7) of the rotor is arranged on the first bearing seat (22) and a second bearing (11) of the rotor is arranged on the second bearing seat (24),
the first bearing (7) being received in the first end shield (6) and the second bearing (11) being received in the second end shield (10).

4. Electric motor according to at least one of the preceding claims,
**characterised in that**
a stator laminated core (2) comprising a stator winding inserted therein is received in the stator casing (1).

5. Electric motor according to at least one of the preceding claims,
**characterised in that**
the first pin region has a toothing region (31), that is, a toothed region, and a cylindrical region (30), the toothing region (31) being pressed into an internally toothed region of the first recess, in particular while being resiliently deformed,
and/or
the second pin region likewise has a toothing region (41), that is, a toothed region, and a cylindrical region (40), the toothing region (41) being pressed into an internally toothed region of the second recess, in particular while being resiliently deformed.

6. Electric motor according to at least one of the preceding claims,
**characterised in that**
a squirrel-cage winding (3) is received in the rotor laminated core (4).

7. Electric motor according to at least one of the preceding claims,
**characterised in that**
the first shaft part (8) has a connection region (20), which in particular has a keyway for connecting to a toothing part, in particular a pinion.

8. Electric motor according to at least one of the preceding claims,
**characterised in that**
the second shaft part (12) has a connection region (23), which in particular has a keyway for connecting to an impeller and/or to a driver.

## Revendications

1. Moteur électrique, comprenant un rotor,
le rotor présentant une partie d'arbre de rotor (9) et une première partie d'arbre (8) et une deuxième partie d'arbre (12),
la partie d'arbre de rotor (9) étant disposée axialement entre la première et la deuxième partie d'arbre (8, 12),
la première partie d'arbre (8) présentant un premier siège de palier (22) et étant reliée de manière solidaire en rotation à la partie d'arbre de rotor (9),
la deuxième partie d'arbre (12) présentant un deuxième siège de palier (24) et étant reliée de manière solidaire en rotation à la partie d'arbre de rotor (9),
un paquet de tôles de rotor (4) étant disposé sur la partie d'arbre de rotor (9), la zone de contact entre le paquet de tôles de rotor (4) et la partie d'arbre de rotor étant moins étendue axialement que le paquet de tôles de rotor (4),
une première fente (15) étant disposée entre le paquet de tôles de rotor (4) et la partie d'arbre de rotor (9), laquelle est adjacente axialement à la zone de contact,
et une deuxième fente (16) étant disposée entre le paquet de tôles de rotor (4) et la partie d'arbre de rotor (9), laquelle est adjacente axialement à la zone de contact,
la première fente (15) et la deuxième fente (16) étant disposées axialement de part et d'autre de la zone de contact,
la première partie d'arbre (8) présentant une première zone de tourillon qui est pressée dans un premier évidement de la partie d'arbre de rotor (9),
la deuxième partie d'arbre (12) présentant une deuxième zone de tourillon qui est pressée dans un deuxième évidement de la partie d'arbre de rotor (9),
la première zone de tourillon et la deuxième zone de tourillon étant respectivement disposées axialement entre la zone de contact et l'un des sièges de palier (22, 24),
la zone axiale couverte par la zone de tourillon de la première partie d'arbre (8) étant en chevauchement avec la zone axiale couverte par la première fente et/ou étant espacée axialement de la zone axiale couverte par la zone de contact,
la zone axiale couverte par la zone de tourillon de la deuxième partie d'arbre (12) étant en chevauchement avec la zone axiale couverte par la deuxième fente et/ou étant espacée axialement de la zone axiale couverte par la zone de contact.

2. Moteur électrique selon la revendication 1,
**caractérisé en ce que**
le rotor est monté dans un premier flasque (6) par l'intermédiaire d'un premier palier (7) et dans un deuxième flasque (10) par l'intermédiaire d'un deuxième palier (11), le premier et le deuxième flasque (6, 10) étant reliés à un boîtier de stator (1) qui est disposé entre le premier et le deuxième flasque (6, 10).

3. Moteur électrique selon au moins l'une des revendications précédentes,
**caractérisé en ce que**
un premier palier (7) du rotor est disposé sur le premier siège de palier (22) et un deuxième palier (11) du rotor sur le deuxième siège de palier (24),
le premier palier (7) étant reçu dans le premier flasque (6) et le deuxième palier (11) dans le deuxième flasque (10).

4. Moteur électrique selon au moins l'une des revendications précédentes,
**caractérisé en ce que**
un paquet de tôles de stator (2) dans lequel est inséré un enroulement de stator est reçu dans le boîtier de stator (1).

5. Moteur électrique selon au moins l'une des revendications précédentes,
**caractérisé en ce que**
la première zone de tourillon présente une zone de denture (31), c'est-à-dire une zone dentée, et une zone cylindrique (30), la zone de denture (31) étant pressée dans une zone dentée intérieurement du premier évidement, en particulier avec une déformation élastique, et/ou
la deuxième zone de tourillon présente également une zone de denture (41), c'est-à-dire une zone dentée, et une zone cylindrique (40), la zone de denture (41) étant pressée dans une zone dentée intérieurement du deuxième évidement, en particulier avec une déformation élastique.

6. Moteur électrique selon au moins l'une des revendications précédentes,
**caractérisé en ce que**
une cage de court-circuit (3) est reçue dans le paquet de tôles de rotor (4).

7. Moteur électrique selon au moins l'une des revendications précédentes,
**caractérisé en ce que**
la première partie d'arbre (8) présente une zone de liaison (20), en particulier qui présente une rainure de clavette pour la liaison avec une partie de denture, en particulier un pignon.

8. Moteur électrique selon au moins l'une des revendications précédentes,
**caractérisé en ce que**
la deuxième partie d'arbre (12) présente une zone de liaison (23), en particulier qui présente une rainure de clavette pour la liaison avec une roue de ventilateur et/ou avec un organe d'entraînement.
